# EUROPEAN PATENT SPECIFICATION

(11) **EP 4 378 691 B1**
(45) Date of publication and mention of the grant of the patent: **14.10.2026**
(21) Application number: 24172058.0
(22) Date of filing: 19.07.2019
(51) Int. Cl.: B01L 3/02, B05B 1/08, B05B 12/08, B05B 17/06, G01F 1/86, G01N 30/28, G01N 35/10, B41J 2/045

(54) **METHOD AND APPARATUS FOR DETERMINING A MASS OF A DROPLET FROM SAMPLE DATA COLLECTED FROM A LIQUID DROPLET DISPENSATION SYSTEM**
VERFAHREN UND VORRICHTUNG ZUR BESTIMMUNG EINER TROPFENMASSE AUS VON EINEM FLÜSSIGKEITSTRÖPFCHENAUSGABESYSTEM GESAMMELTEN PROBENDATEN
PROCÉDÉ ET APPAREIL POUR DÉTERMINER UNE MASSE DE GOUTTELETTE À PARTIR DE DONNÉES D'ÉCHANTILLON COLLECTÉES À PARTIR D'UN SYSTÈME DE DISTRIBUTION DE GOUTTELETTE DE LIQUIDE

(30) Priority: 20.07.2018 US 201862701061 P
(43) Date of publication of application: 05.06.2024
(62) Document number(s) of the earlier application(s) in accordance with Art. 76 EPC: 19837649.3 / 3 823 758
(73) Proprietor: Brighton Technologies, LLC, Cincinnati, OH 45217 (US)
(72) Inventor: KOVAL, Richard David, Cincinnati, 45217 (US); JEAN-GILLES, Guyrandy, Cincinnati, 45217 (US); GILPIN, Andrew Davison, Cincinnati, 45217 (US); GEREN, Michael Anthony, Cincinnati, 45217 (US); DILLINGHAM, Raymond Giles, Cincinnati, 45217 (US); BARRY, Timothy James, Cincinnati, 45217 (US)
(74) Representative: Forresters IP LLP

(56) References cited:
- US-A1- 2012 274 691
- US-B1- 6 764 168

## Description

### REFERENCE TO RELATED APPLICATION

This application claims priority of U.S. provisional patent application Serial No. 62/701,061, entitled Apparatus and Method for Detection of Bubbles, filed July 20, 2018.

### TECHNICAL FIELD

A method for collecting sample data from a liquid droplet dispensation system is provided. The sample data is used to determine a mass of a droplet from the liquid droplet dispensation system without physically measuring the droplet.

### BACKGROUND

Liquid deposition processes are used today for a wide range of applications and typically involve depositing a volume of liquid (e.g., a droplet) from a reservoir to a remote location. One example of such a liquid deposition process is a printing process, which involves ejecting a volume of liquid from a nozzle and to a specific location on a substrate. Another example of such a liquid deposition process is a combinatorial chemistry experiment, which involves depositing a precise volume of a liquid reagent into a cell to react with other reagents. Yet another example of such a liquid deposition process is a surface adhesion testing process, which involves depositing a volume of liquid onto a surface, and measuring the dimensions of the resulting drop of liquid on the surface to assess the wettability of the surface. These processes typically require precise control of the volume of deposited liquid and in some cases, such as for printing and surface adhesion testing, can also require control of the velocity of the liquid as it is being deposited.

Generally, these liquid deposition processes utilize a fluid deposition system that includes a reservoir of pressurized fluid and a valve associated with the reservoir. The valve is selectively opened or closed to dispense a desired volume of the pressurized fluid from the reservoir. The volume of the dispensed liquid is typically controlled by varying the applied pressure and the amount of time that the valve is opened. For a predefined valve cycle time (e.g., the amount of time that the valve remains opened), the volume of the fluid dispensed from the reservoir can be proportional to the dispensation velocity of the liquid. For example, the higher the velocity of the fluid that is dispensed from the reservoir for a predefined valve cycle time, the more volume of fluid will be dispensed therefrom. However, the volume of the dispensed liquid can also be influenced by the characteristics of the liquid (e.g., the viscosity), the mechanical characteristics of the system components (e.g., resistance to flow), and/or the compliance of the liquid deposition system.

The compliance of the liquid deposition system can be understood to be a measurement of the susceptibility of the components of the liquid deposition system to expand when under pressure. The expansion of the components can store mechanical energy, such that, when the valve is opened, the mechanical energy can be at least partially imparted into the pressurized fluid to encourage the dispensation of the liquid from the reservoir at a higher velocity than would be possible from the pressure alone. The velocity of the dispensed liquid therefore can also be a function of the compliance of the components of the system such that components with higher compliance (e.g., softer components) can generate a higher velocity than components with lower compliance (e.g., more rigid components).

The compliance of the liquid deposition system can also be affected by the presence of bubbles in the liquid deposition system (e.g., due to incomplete purging of the system or dissolved gases in the liquid). The bubbles have generally elastic properties such that when the liquid is under pressure, any bubbles present in the system can effectively store mechanical energy. When the valve is opened, the bubbles can release the stored energy thereby causing the fluid to be dispensed at a higher velocity than would be possible from the pressure alone. The amount of bubbles present in the fluid can be difficult to determine and the resulting change in the velocity and volume of the dispensed fluid can therefore be unpredictable, resulting in inaccuracy in the dispensation process. US-A-2012/274691 discloses the preamble of claim 1.

The present invention is disclosed in appended claims 1 to 15.

### BRIEF DESCRIPTION OF THE DRAWINGS

It is believed that certain embodiments will be better understood from the following description taken in conjunction with the accompanying drawings in which:
FIG. 1 is a schematic view depicting a liquid droplet dispensation system;
FIG. 2 is a plot of a pair of curves depicting a relationship between pressure and velocity of a droplet for different fluid samples tested in the liquid droplet dispensation system of FIG. 1; and
FIG. 3 is a plot of a pair of curves depicting a relationship between velocity and mass of a droplet for different fluid samples tested in the liquid droplet dispensation system of FIG. 1.

### DETAILED DESCRIPTION

Various non-limiting embodiments of the present disclosure will now be described to provide an overall understanding of the principles of the structure, function, and use of the apparatuses, systems, methods, and processes disclosed herein. One or more examples of these non-limiting embodiments are illustrated in the accompanying drawings. Those of ordinary skill in the art will understand that systems and methods specifically described herein and illustrated in the accompanying drawings are non-limiting embodiments. The features illustrated or described in connection with one non-limiting embodiment may be combined with the features of other non-limiting embodiments. Such modifications and variations are intended to be included within the scope of the present disclosure.

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," some example embodiments," "one example embodiment," or "in an embodiment" in places throughout the specification are not necessarily all referring to the same embodiment. Furthermore, the particular features, structures or characteristics may be combined in any suitable manner in one or more embodiments. In various embodiments disclosed herein, a single component can be replaced by multiple components and multiple components can be replaced by a single component to perform a given function or functions. Except where such substitution would not be operative, such substitution is within the intended scope of the embodiments.

Described herein are example embodiments of apparatuses, systems, and methods for collecting sample data from a liquid droplet dispensation system and using the sample data to determine a mass of a droplet without physically measuring the droplet.

The examples discussed herein are examples only and are provided to assist in the explanation of the apparatuses, devices, systems and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. Any failure to specifically describe a combination or sub-combination of components should not be understood as an indication that any combination or sub-combination is not possible. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

In general, it will be apparent to one of ordinary skill in the art that at least some of the embodiments described herein can be implemented in many different embodiments of software, firmware, and/or hardware. The software and firmware code can be executed by a processor or any other similar computing device. The software code or specialized control hardware that can be used to implement embodiments is not limiting. For example, embodiments described herein can be implemented in computer software using any suitable computer software language type, using, for example, conventional or object-oriented techniques. Such software can be stored on any type of suitable computer-readable medium or media, such as, for example, a magnetic or optical storage medium. The operation and behavior of the embodiments can be described without specific reference to specific software code or specialized hardware components. The absence of such specific references is feasible, because it is clearly understood that artisans of ordinary skill would be able to design software and control hardware to implement the embodiments based on the present description with no more than reasonable effort and without undue experimentation.

Moreover, the processes described herein can be executed by programmable equipment, such as computers or computer systems and/or processors. Software that can cause programmable equipment to execute processes can be stored in any storage device, such as, for example, a computer system (nonvolatile) memory, an optical disk, magnetic tape, or magnetic disk. Furthermore, at least some of the processes can be programmed when the computer system is manufactured or stored on various types of computer-readable media.

It can also be appreciated that certain portions of the processes described herein can be performed using instructions stored on a computer-readable medium or media that direct a computer system to perform the process steps. A computer-readable medium can include, for example, memory devices such as diskettes, compact discs (CDs), digital versatile discs (DVDs), optical disk drives, or hard disk drives. A computer-readable medium can also include memory storage that is physical, virtual, permanent, temporary, semi-permanent, and/or semi-temporary.

A "computer," "computer system," "host," "server," or "processor" can be, for example and without limitation, a processor, microcomputer, minicomputer, server, mainframe, laptop, personal data assistant (PDA), wireless e-mail device, cellular phone, pager, processor, fax machine, scanner, or any other programmable device configured to transmit and/or receive data over a network. Computer systems and computer-based devices disclosed herein can include memory for storing certain software modules used in obtaining, processing, and communicating information. It can be appreciated that such memory can be internal or external with respect to operation of the disclosed embodiments. The memory can also include any means for storing software, including a hard disk, an optical disk, floppy disk, ROM (read only memory), RAM (random access memory), PROM (programmable ROM), EEPROM (electrically erasable PROM) and/or other computer-readable media. Non-transitory computer-readable media, as used herein, comprises all computer-readable media except for transitory, propagating signals.

A computer system in accordance with the present disclosure can be accessed via any suitable technique, such as a web-browser such as SAFARI, OPERA, GOOGLE CHROME, INTERNET EXPLORER, or the like, executing on a client device. In some embodiments, the systems and methods described herein can be a web-based application or a stand-alone executable. Additionally, in some embodiments, the systems and methods described herein can integrate with various types of computer systems, such as monitoring and control systems, and the like. Any suitable client device can be used to access, or execute, the computing system, such as laptop computers, desktop computers, smart phones, tablet computers, gaming system, and the like. Systems and methods described herein may generally provide a real time or near real-time monitoring environment. Interaction with the system may include, without limitation, keyboard entry, writing from pen, stylus, finger, or the like, with a computer mouse, or other forms of input (voice recognition, etc.). A dashboard or other metrics may be presented on a tablet, desktop, or the like.

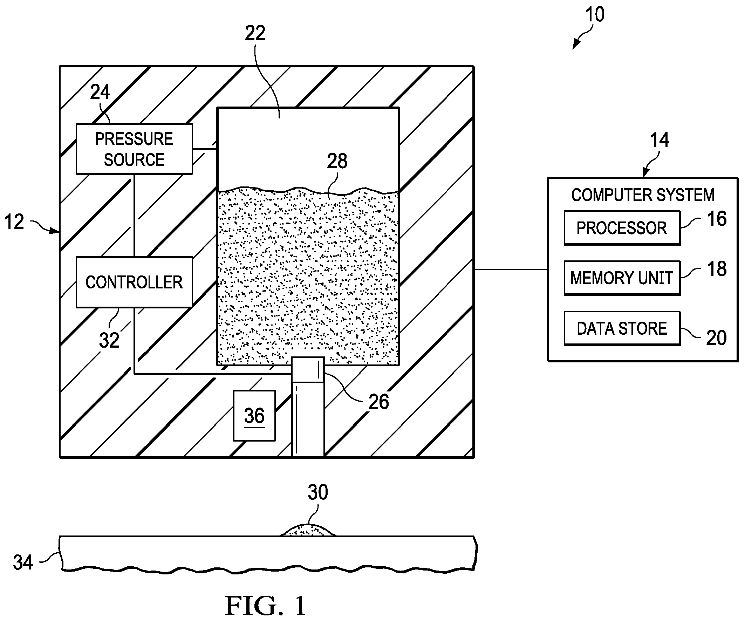

In connection with the views and examples of FIGS. 1-3, wherein like numbers indicate the same or corresponding elements throughout the views, FIG. 1 illustrates one embodiment of a testing system 10 that can be utilized to facilitate testing of a liquid droplet dispensation system 12 as described further herein.

The testing system 10 can include a computing system 14 that can be provided using any suitable processor-based device or system, such as a personal computer, mobile communication device, laptop, tablet, server, mainframe, or a collection (e.g., network) of multiple computers, for example. The computing system 14 can include one or more processors 16 and one or more memory units 18. For convenience, only one processor 16 and only one memory unit 18 are shown in FIG. 1. The processor 16 can execute software instructions stored on the memory unit 18. The processor 16 can be implemented as an integrated circuit (IC) having one or multiple cores. The computing system 14 can also utilize one or more Graphical Processing Units (GPU) to assist with various aspects of image processing. The memory unit 18 can include volatile and/or non-volatile memory units. Volatile memory units can include random access memory (RAM), for example. Non-volatile memory units can include read only memory (ROM), for example, as well as mechanical non-volatile memory systems, such as, for example, a hard disk drive, an optical disk drive, etc. The RAM and/or ROM memory units can be implemented as discrete memory ICs, for example.

The memory unit 18 can store executable software and data for use by the computing system 14 described herein. When the processor 16 of the computing system 14 executes the software, the processor 16 can be caused to perform the various operations of the computing system 14, such as collect sample data, generate data sets from the sample data, and determine a mass of a droplet from the sample data.

Data collected and used by computing system 14 can be stored at various sources, such as a data store 20, which can be a non-volatile computer memory, such as a hard disk drive, a read only memory (e.g., a ROM IC), or other types of non-volatile memory. In some embodiments, the data store 20 can be stored on a remote electronic computer system (e.g., cloud-based storage), for example. As is to be appreciated, a variety of other data stores, databases, or other types of memory storage structures, can be utilized or otherwise associated with the computing system 14.

The liquid droplet dispensation system 12 can include a reservoir 22, a pressure source 24 associated with the reservoir 22, and a valve 26 associated with the reservoir 22. The reservoir 22 can contain a fluid 28 and the pressure source 24 can be configured to selectively impart different pressures to the fluid 28 in the reservoir 22. In one embodiment, the pressure source 24 can be a pump. The valve 26 can be selectively actuated between a closed position and an opened position to facilitate dispensation of a droplet 30 of fluid from the reservoir 22 and onto a substrate 34. The pressure source 24 and the valve 26 can be associated with a controller 32 that is configured to control the pressure source 24 and the valve 26 to facilitate dispensation of the droplet 30 from the reservoir 22 onto the substrate 34. In one embodiment, the controller 32 can be an on-chip controller. The liquid droplet dispensation system 12 can include a velocity sensor 36 that is provided adjacent to the valve 26 and is configured to measure the velocity of the droplet 30 as it is dispensed from the valve 26 onto the substrate 34. In one embodiment, the velocity sensor 36 can comprise a chronograph that has a pair of light barrier beams that are spaced a known distance from each other. In such an embodiment, the velocity of the droplet 30 is measured based upon the elapsed time between the droplet 30 breaking the path of each of the light barrier beams.

In one embodiment, the liquid droplet dispensation system 12 can be a surface testing device that facilitates measuring of the wetting characteristics of a substrate. One example of such a surface testing device is disclosed in U.S. Pat. No. 8,272,254, which is incorporated by reference herein in its entirety. In another embodiment, the liquid droplet dispensation system 12 can be an inkjet printer. It is to be appreciated that any of a variety of suitable alternative liquid droplet dispensation systems are contemplated for the methods and processes described below.

It is to be appreciated that knowing the mass of the droplet 30 can be useful in certain liquid droplet dispensation systems. The fluid 28 used in the liquid droplet dispensation system 12, however, can inherently contain entrained air (e.g., microbubbles), which affects the ability to accurately predict the mass for a given pressure and the opening time of the valve 26. The amount of entrained air contained in the fluid 28 can be difficult to measure and/or control and can be different each time fluid is provided in the reservoir 22. As a result, the mass of a dispensed droplet can be difficult to predict without physically measuring the droplet 30, which can be difficult, and in some cases impossible, to accomplish during use of the liquid droplet dispensation system 12 in the field. A method for collecting sample data from the liquid droplet dispensation system 12 will now be discussed. The sample data can be useful in determining a mass of a droplet dispensed from the liquid droplet dispensation system 12 for fluids with different amounts of entrained air.

First, the reservoir 22 is filled with a first fluid sample (e.g., 28) that inherently contains an unknown amount of entrained air (e.g. which could be zero). A first pressure is applied to the first fluid sample via the pressure source 24 and a droplet (e.g., 30) is dispensed from the reservoir 22 by opening and closing the valve 26 for an elapsed time. The velocity of the droplet is measured with the velocity sensor 36 and the mass of the droplet is weighed. The pressure, velocity, and mass of the droplet is logged as a data point in the data store 20 of the computing system 14. A different pressure is then applied to the first fluid sample and a different droplet is dispensed from the reservoir 22 by opening and closing the valve 26 for the same (e.g., substantially the same) elapsed time as the previous droplet. The velocity of the droplet is measured with the velocity sensor 36 and the mass of the droplet is weighed. The pressure, velocity, and mass of the different droplet is logged as another data point for the first fluid sample in the data store 20 of the computing system 14. This process is then repeated for different pressures until a sufficient data set (e.g., a grouping) has been generated for the first fluid sample.

In one embodiment, the testing can be performed manually and manually logged into the computing system 14 (e.g., via a keyboard). In another embodiment, the testing can be automated by the computing system 14 such that the data set is automatically logged into the computing system 14 (e.g., via a communication interface).

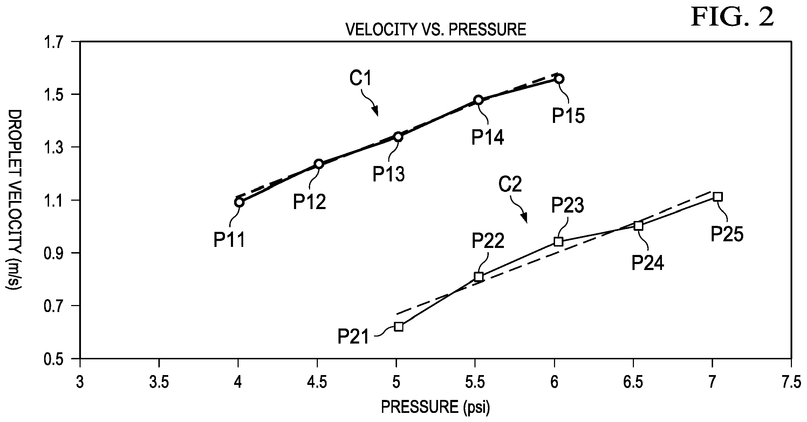

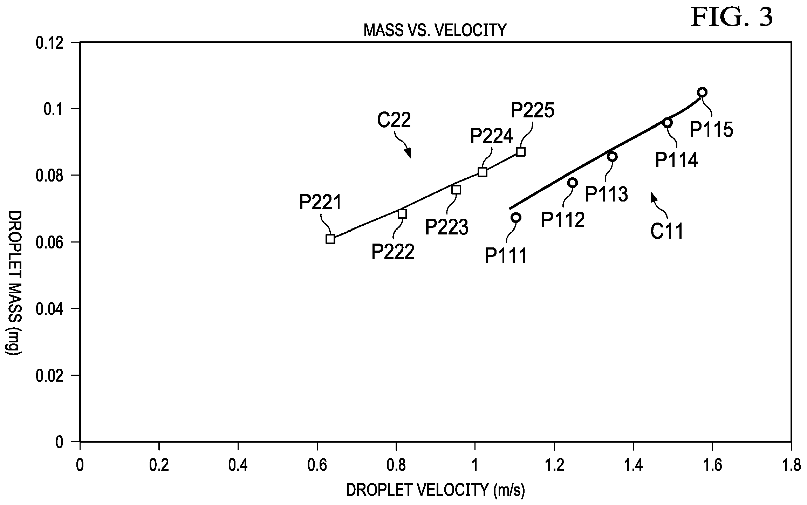

The data set can be representative of the relationship between pressure, velocity, and droplet mass for the first fluid sample. FIG. 2 illustrates one example of a curve C1 that can be generated from the data set for the first fluid sample to illustrate the relationship between velocity and pressure for the first fluid sample. The curve C1 can be comprised of a variety of data points P11-P15 from the data set that are curve fit (or otherwise extrapolated) to generate the curve C1. FIG. 3 illustrates one example of a curve C11 that can be generated from the data set for the first fluid sample to illustrate the relationship between droplet mass and velocity for the first fluid sample. The curve C11 can be comprised of a variety of data points P111-P115 from the data set that are curve fit (or otherwise extrapolated) to generate the curve C11.

Once the testing on the first fluid sample is complete, the reservoir 22 is emptied and filled with a second fluid sample that also contains an unknown amount of entrained air. A pressure is applied to the second fluid sample and a droplet is dispensed from the reservoir 22. The velocity of the droplet is measured with the velocity sensor 36 and the mass of the droplet is weighed. The pressure, velocity, and mass of the droplet is logged as a data point for the second fluid sample in the data store 20 of the computing system 14. A different pressure is then applied to the second fluid sample, and a different droplet is dispensed from the reservoir 22 by opening and closing the valve 26 for the same (e.g., substantially the same) elapsed time as the previous droplet. The velocity of the droplet is measured with the velocity sensor 36 and the mass of the droplet is weighed. The pressure, velocity, and mass of the different droplet is logged as another data point for the second fluid sample in the data store 20 of the computing system 14. This process is then repeated for different pressures until a sufficient data set (e.g., a grouping) has been generated for the second fluid sample.

The data set can be representative of the relationship between pressure, velocity, and droplet mass for the second fluid sample. FIG. 2 illustrates one example of a curve C2 that can be generated from the data set for the first fluid sample to illustrate the relationship between velocity and pressure for the first fluid sample. The curve C2 can be comprised of a variety of data points P21-P25 from the data set that are curve fit (or otherwise extrapolated) to generate the curve C2. FIG. 3 illustrates one example of a curve C22 that can be generated from the data set for the first fluid sample to illustrate the relationship between droplet mass and velocity for the first fluid sample. The curve C22 can be comprised of a variety of data points P221-P225 from the data set that are curve fit (or otherwise extrapolated) to generate the curve C22.

It is to be appreciated that the process can be repeated for as many fluid samples, fluid types, and/or valve open times as desired to generate a complete collection of sample data for the liquid droplet dispensation system 12. Once the testing has been completed, the sample data (including any interpolated/extrapolated data) can be loaded onto the liquid droplet dispensation system 12 as comparative sample data as part of the commissioning process of the liquid droplet dispensation system 12. In one embodiment, the comparative sample data can comprise a lookup table.

During operation of the liquid droplet dispensation system 12 in the field, each droplet can be dispensed from the liquid droplet dispensation system 12 at a particular pressure and valve open time. During dispensation of the droplet, the velocity of the droplet can be measured by the velocity sensor 36. The pressure, the valve open time, and the velocity of the droplet can then be compared against the comparative sample time to determine the mass of the droplet. In particular, the pressure, the valve open time, and the velocity of the droplet can be compared with each of the data points in the comparative sample data. The data point that has a pressure, valve open time, and velocity that most closely matches the pressure, the valve open time, and the velocity of the droplet can be identified, and the mass listed in the data point can be used as the mass for the droplet. The comparative sample data can accordingly be used to determine the mass of the droplet more accurately than conventional arrangements and without requiring physical measurement of the droplet.

It is to be appreciated that the comparative sample data obtained from the liquid droplet dispensation system 12 can be deployed in other similar liquid droplet dispensation systems during manufacturing to allow each of the liquid droplet dispensation systems to use the comparative sample data in a similar manner.

## Claims

1. A method for operating a liquid droplet dispensation system (12) comprising a reservoir (22), the method comprising:
dispensing a first droplet of a first fluid sample (28), containing an unknown amount of entrained air, from the reservoir (22) at a first pressure;
measuring a first velocity of the first droplet during dispensation at the first pressure;
measuring a first mass of the first droplet (30);
logging the first pressure, first velocity, and first mass of the first droplet as a first data point;
dispensing a second droplet (30) of the first fluid sample (28) from the reservoir (22) at a second pressure;
measuring a second velocity of the second droplet (30) during dispensation at the second pressure;
measuring a second mass of the second droplet (30); **characterised in that** the method further comprises:
logging the second pressure, second velocity, and second mass of the first droplet (30) as a second data point;
generating a comparative data set that comprises the first data point and the second data point;
emptying the reservoir (22) from the first fluid sample (28) and filling the reservoir (22) with a second fluid sample (28);
dispensing a droplet (30) of a second fluid sample (28), containing an unknown amount of entrained air, from the reservoir (22) at a third pressure;
measuring a third velocity of the droplet (30) of the second fluid sample (28) during dispensation at the third pressure; and
determining a mass of the droplet (30) of the second fluid sample (28) based upon the first and second data points in the comparative data set, the third pressure, and the third velocity.

2. The method of claim 1 wherein:
the liquid droplet dispensation system (12) further comprises a valve (26) associated with the reservoir (22);
dispensing the first droplet (30) of the first fluid sample (28) comprises opening the valve (26) for a first predefined period of time;
dispensing the second droplet (30) of the first fluid sample (28) comprises opening the valve (26) for a second predefined period of time; and
dispensing the droplet (30) of the second fluid sample (28) comprises opening the valve (26) for a third predefined period of time, wherein the first predefined period of time, the second predefined period of time, and the third predefined period of time are substantially the same.

3. The method of claim 1 wherein the liquid droplet dispensation system (12) further comprises a velocity sensor (36) for measuring the first velocity, the second velocity, and the third velocity, and optionally wherein the velocity sensor (36) comprises a chronograph that has a pair of light barrier beams that are spaced a known distance from each other.

4. The method of claim 3 wherein the liquid droplet dispensation system (12) is a surface testing device.

5. The method of claim 1 further comprising:
identifying a first relationship between the first pressure, the first velocity, and the first mass for the first fluid sample (28) based on the first data point in the comparative data set; and
identifying a second relationship between the second pressure, the second velocity, and the second mass for the first fluid sample (28) based on the second data point in the comparative data set, wherein determining the mass of the droplet (30) of the second fluid sample is further based on the first relationship and the second relationship.

6. The method of claim 1 further comprising:
dispensing a first droplet (30) of a third fluid sample (28), containing an unknown amount of entrained air, from the reservoir (22) at a fourth pressure;
measuring a fourth velocity of the first droplet (30) of the third fluid sample (28) during dispensation at the fourth pressure;
measuring a fourth mass of the first droplet (30) of the third fluid sample;
logging the fourth pressure, fourth velocity, and fourth mass of the first droplet (30) of the third fluid sample (28) as a third data point;
dispensing a second droplet (30) of the third fluid sample (28) from the reservoir (22) at a fifth pressure;
measuring a fifth velocity of the second droplet (30) of the third fluid sample (28) during dispensation at the fifth pressure;
measuring a fifth mass of the second droplet (30) of the third fluid sample (28);
logging the fifth pressure, fifth velocity, and fifth mass of the second droplet (30) of the third fluid sample (28) as a fourth data point;
generating a second comparative data set that comprises the third data point and the fourth data point; and
determining the mass of the droplet (30) of the second fluid sample (28) based further upon the third and fourth data points in the second comparative data set..

7. The method of claim 6 wherein:
the liquid droplet dispensation system (12) further comprises a valve (26) associated with the reservoir (22);
dispensing the first droplet (30) of the first fluid sample (28) comprises opening the valve (26) for a first predefined period of time;
dispensing the second droplet (30) of the first fluid sample (28) comprises opening the valve (26) for a second predefined period of time;
dispensing the droplet (30) of the second fluid sample (28) comprises opening the valve (26) for a third predefined period of time;
dispensing the first droplet (30) of the third fluid sample (28) comprises opening the valve (26) for a fourth predefined period of time; and
dispensing the second droplet (30) of the third fluid sample (28) comprises opening the valve (26) for a fifth predefined period of time, wherein the first predefined period of time, the second predefined period of time, the third predefined period of time, the fourth predefined period of time, and the fifth predefined period of time are substantially the same.

8. The method of claim 6 further comprising:
identifying a fourth relationship between the fourth pressure, the fourth velocity, and the fourth mass for the third fluid sample (28) based on the third data point in the comparative data set; and
identifying a fifth relationship between the fifth pressure, the fifth velocity, and the fifth mass for the third fluid sample (28) based on the fourth data point in the comparative data set, wherein determining the mass of the droplet (30) of the second fluid sample (28) is further based on the fourth relationship and the fifth relationship.

9. The method of claim 6 wherein the liquid droplet dispensation system (12) further comprises a chronograph for measuring the first velocity, the second velocity, the third velocity, the fourth velocity, and the fifth velocity; wherein the chronograph has a pair of light barrier beams that are spaced a known distance from each other.

10. A method for collecting sample data from a liquid droplet dispensation system (12) comprising a reservoir (22), the method comprising:
dispensing a droplet (30) of a first fluid sample (28), containing an unknown amount of entrained air, from the reservoir (22) at a first pressure;
measuring a first velocity of the droplet (30) of the first fluid sample (28) during dispensation at the first pressure;
measuring a first mass of the droplet (30) of the first fluid sample (28);
logging the first pressure, first velocity, and first mass of the first droplet (30) of the first fluid sample (28) as a first data point;
conducting further testing on the first fluid sample (28) in a repeating pattern and in the following order:
dispensing a different droplet (30) of the first fluid sample (28) from the reservoir (22) at a different first fluid sample (28) pressure that is different from the first pressure;
measuring a velocity of the different droplet (30) of the first fluid sample (28) during dispensation at the different first fluid sample (28) pressure; and
measuring a mass of the different droplet (30) of the first fluid sample (28);
logging the different pressure, the velocity, and the mass of the different droplet (30) of the first fluid sample (28) as another data point for the first fluid sample (28);
generating a comparative data set that comprises the first data point and another data point of the first fluid sample (28);
emptying the reservoir (22) from the first fluid sample (28) and filling the reservoir (22) with a second fluid sample (28);
dispensing a droplet (30) of a second fluid sample (28), containing unknown amount of entrained air, from the reservoir (22) at a second pressure;
measuring a second velocity of the droplet (30) of the second fluid sample (28) during dispensation at the second pressure; and
determining a mass of the droplet (30) of the second fluid sample (28) based upon the first data point and another data points in the comparative data set, the second pressure, and the second velocity.

11. The method of claim 10 wherein:
the liquid droplet dispensation system (12) further comprises a valve (26) associated with the reservoir (22);
dispensing the first droplet (30) of the first fluid sample (28) comprises opening the valve (26) for a first predefined period of time;
dispensing each different droplet (30) of the first fluid sample (28) comprises opening the valve (26) for a second predefined period of time; and
dispensing the first droplet (30) of the second fluid sample (28) comprises opening the valve (26) for a third predefined period of time, wherein the first predefined period of time, the second predefined period of time, and the third predefined period of time are substantially the same.

12. A liquid droplet dispensation testing system (12) comprising:
a liquid droplet dispensation system comprising:
a reservoir (22) configured to contain a fluid (28);
a pressure source (24) configured to selectively impart different pressures to the fluid (28) in the reservoir (22);
a valve (26) associated with the reservoir (22) and configured for selective actuation between a closed position and an opened position to facilitate dispensation of a droplet (30) of fluid (28) from the reservoir (22);
a velocity sensor (36) that is provided adjacent to the valve (26) and is configured to measure a velocity of the droplet (30) as it is dispensed from the valve (26);
a controller (32) associated with the pressure source (24) and the valve (26) and configured to:
operate the pressure source (24) to facilitate pressurization of a first fluid sample (28) in the reservoir (22) to a first pressure, the first fluid sample (28) having a first amount of entrained air contained therein;
operate the valve (26) to facilitate dispensation of a first droplet (30) of the first fluid sample (28) from the reservoir (22) at the first pressure;
operate the pressure source (24) to facilitate pressurization of the first fluid sample (28) in the reservoir (22) to a second pressure;
operate the valve (26) to facilitate dispensation of a second droplet (30) of the first fluid sample (28) from the reservoir (22) at the second pressure;
operate the pressure source (24) to facilitate pressurization of a second fluid sample (28) in the reservoir (22) to a third pressure; and
operate the valve (26) to facilitate dispensation of a droplet (30) of the
second fluid sample (28) from the reservoir (22) at the third pressure; and **characterised in that** the system further comprises
a computing system (14) comprising one or more processors (16) configured to:
measure a first velocity of the first droplet (30) of the first fluid sample (28) via the velocity sensor (36) during dispensation at the first pressure;
measure a first mass of the first droplet (30) of the first fluid sample (28);
log the first pressure, first velocity, and first mass of the first droplet (30) of the first fluid sample (28) as a first data point;
measure a second velocity of the second droplet (30) of the first fluid sample (28) via the velocity sensor (36) during dispensation at the second pressure;
measure a second mass of the second droplet (30) of the first fluid sample (28);
log the second pressure, second velocity, and second mass of the second droplet (30) of the first fluid sample (28) as a second data point;
generate a comparative data set that comprises the first data point and the second data point of the first fluid sample (28);
measure a third velocity of the droplet (30) of the second fluid sample (28) via the velocity sensor (36) during dispensation at the third pressure; and
determine a mass of the droplet (30) of the second fluid sample (28) based upon the first and second data points in the comparative data set, the third pressure, and the third velocity.

13. The liquid droplet dispensation testing system (12) of claim 12 wherein:
operating the valve (26) to facilitate dispensation of the first droplet (30) of the first fluid sample (28) comprises opening the valve (26) for a first predefined period of time;
operating the valve (26) to facilitate dispensation of the second droplet (30) of the first fluid sample (28) comprises opening the valve (26) for a second predefined period of time;
operating the valve (26) to facilitate dispensation of the droplet (30) of the second fluid sample (28) comprises opening the valve (26) for a third predefined period of time; and
the first predefined period of time, the second predefined period of time, and the third predefined period of time are substantially the same.

14. The liquid droplet dispensation testing system (12) of claim 12 wherein:
the one or more processors (16) are further configured to identify a first relationship between the first pressure, the first velocity, and the first mass for the first fluid sample (28) based on the first data point in the comparative data set;
the one or more processors (16) are further configured to identify a second relationship between the second pressure, the second velocity, and the second mass for the first fluid sample based on the second data point in the comparative data set; and
the mass of the droplet (30) of the second fluid sample (28) is further determined based upon the first relationship and the second relationship.

15. The liquid droplet dispensation testing system (12) of claim 12 wherein:
the controller (32) is further configured to:
operate the pressure source (24) to facilitate pressurization of a third fluid sample (28) in the reservoir (22) to a fourth pressure;
operate the valve (26) to facilitate dispensation of a first droplet (30) of the third fluid sample (28) from the reservoir (28) at the fourth pressure;
operate the pressure source (24) to facilitate pressurization of the third fluid sample (28) in the reservoir (22) to a fifth pressure; and
operate the valve (26) to facilitate dispensation of a second droplet (30) of the third fluid sample (28) from the reservoir (22) at the fifth pressure; and
the one or more processors (16) are further configured to:
measure a fourth velocity of the first droplet (30) of the third fluid sample (28) via the velocity sensor (36) during dispensation at the fourth pressure;
measure a fourth mass of the first droplet (30) of the third fluid sample (28);
log the fourth pressure, fourth velocity, and fourth mass of the first droplet (30) of the third fluid sample (28) as a third data point;
measure a fifth velocity of the second droplet (30) of the third fluid sample (28) via the velocity sensor (36) during dispensation at the fifth pressure;
measure a fifth mass of the second droplet (30) of the third fluid sample (28);
log the fifth pressure, fifth velocity, and fifth mass of the second droplet (30) of the third fluid sample (28) as a fourth data point;
generate a second comparative data set that comprises the third data point and the fourth data point; and
determine the mass of the droplet (30) of the second fluid sample (28) based further upon the third and fourth data points in the second comparative data set.

## Patentansprüche

1. Ein Verfahren zum Betreiben eines Flüssigkeitströpfchen-Abgabesystems (12), das einen Tank (22) umfasst, das Verfahren umfassend:
Abgeben eines ersten Tröpfchens einer ersten Fluidprobe (28), die eine unbekannte Menge an mitgeführter Luft enthält, aus dem Tank (22) unter einem ersten Druck;
Messen einer ersten Geschwindigkeit des ersten Tröpfchens während der Abgabe unter dem ersten Druck;
Messen einer ersten Masse des ersten Tröpfchens (30);
Aufzeichnen des ersten Drucks, der ersten Geschwindigkeit und der ersten Masse des ersten Tröpfchens als einen ersten Datenpunkt;
Abgeben eines zweiten Tröpfchens (30) der ersten Fluidprobe (28) aus dem Tank (22) unter einem zweiten Druck;
Messen einer zweiten Geschwindigkeit des zweiten Tröpfchens (30) während der Abgabe unter dem zweiten Druck;
Messen einer zweiten Masse des zweiten Tröpfchens (30); **dadurch gekennzeichnet, dass** das Verfahren ferner umfasst:
Aufzeichnen des zweiten Drucks, der zweiten Geschwindigkeit und der zweiten Masse des ersten Tröpfchens (30) als einen zweiten Datenpunkt;
Erzeugen eines Vergleichsdatensatzes, der den ersten Datenpunkt und den zweiten Datenpunkt umfasst;
Entleeren der ersten Fluidprobe (28) aus dem Tank (22) und Befüllen des Tanks (22) mit einer zweiten Fluidprobe (28);
Abgeben eines Tröpfchens (30) einer zweiten Fluidprobe (28), die eine unbekannte Menge an mitgeführter Luft enthält, aus dem Tank (22) unter einem dritten Druck;
Messen einer dritten Geschwindigkeit des Tröpfchens (30) der zweiten Fluidprobe (28) während der Abgabe unter dem dritten Druck; und
Bestimmen einer Masse des Tröpfchens (30) der zweiten Fluidprobe (28) auf der Grundlage des ersten und des zweiten Datenpunkts in dem Vergleichsdatensatz, des dritten Drucks und der dritten Geschwindigkeit.

2. Verfahren nach Anspruch 1, wobei:
das Flüssigkeitströpfchen-Abgabesystem (12) ferner ein dem Tank (22) zugeordnetes Ventil (26) umfasst;
das Abgeben des ersten Tröpfchens (30) der ersten Fluidprobe (28) ein Öffnen des Ventils (26) für eine erste vordefinierte Zeitspanne umfasst;
das Abgeben des zweiten Tröpfchens (30) der ersten Fluidprobe (28) ein Öffnen des Ventils (26) für eine zweite vordefinierte Zeitspanne umfasst; und
das Abgeben des Tröpfchens (30) der zweiten Fluidprobe (28) ein Öffnen des Ventils (26) für eine dritte vordefinierte Zeitspanne umfasst, wobei die erste vordefinierte Zeitspanne, die zweite vordefinierte Zeitspanne und die dritte vordefinierte Zeitspanne im Wesentlichen gleich sind.

3. Verfahren nach Anspruch 1, wobei das Flüssigkeitströpfchen-Abgabesystem (12) ferner einen Geschwindigkeitssensor (36) zum Messen der ersten Geschwindigkeit, der zweiten Geschwindigkeit und der dritten Geschwindigkeit umfasst und wobei der Geschwindigkeitssensor (36) optional einen Chronographen umfasst, der ein Paar Lichtschrankenstrahlen aufweist, die in einem bekannten Abstand voneinander beabstandet sind.

4. Verfahren nach Anspruch 3, wobei das Flüssigkeitströpfchen-Abgabesystem (12) eine Oberflächentestvorrichtung ist.

5. Verfahren nach Anspruch 1, ferner umfassend:
Identifizieren einer ersten Beziehung zwischen dem ersten Druck, der ersten Geschwindigkeit und der ersten Masse für die erste Fluidprobe (28) auf der Grundlage des ersten Datenpunkts in dem Vergleichsdatensatz; und
Identifizieren einer zweiten Beziehung zwischen dem zweiten Druck, der zweiten Geschwindigkeit und der zweiten Masse für die erste Fluidprobe (28) auf der Grundlage des zweiten Datenpunkts in dem Vergleichsdatensatz, wobei das Bestimmen der Masse des Tröpfchens (30) der zweiten Fluidprobe ferner auf der Grundlage der ersten Beziehung und der zweiten Beziehung erfolgt.

6. Verfahren nach Anspruch 1, ferner umfassend:
Abgeben eines ersten Tröpfchens (30) einer dritten Fluidprobe (28), die eine unbekannte Menge an mitgeführter Luft enthält, aus dem Tank (22) unter einem vierten Druck;
Messen einer vierten Geschwindigkeit des ersten Tröpfchens (30) der dritten Fluidprobe (28) während der Abgabe unter dem vierten Druck;
Messen einer vierten Masse des ersten Tröpfchens (30) der dritten Fluidprobe;
Aufzeichnen des vierten Drucks, der vierten Geschwindigkeit und der vierten Masse des ersten Tröpfchens (30) der dritten Fluidprobe (28) als einen dritten Datenpunkt;
Abgeben eines zweiten Tröpfchens (30) der dritten Fluidprobe (28) aus dem Tank (22) unter einem fünften Druck;
Messen einer fünften Geschwindigkeit des zweiten Tröpfchens (30) der dritten Fluidprobe (28) während der Abgabe unter dem fünften Druck;
Messen einer fünften Masse des zweiten Tröpfchens (30) der dritten Fluidprobe (28);
Aufzeichnen des fünften Drucks, der fünften Geschwindigkeit und der fünften Masse des zweiten Tröpfchens (30) der dritten Fluidprobe (28) als einen vierten Datenpunkt;
Erzeugen eines zweiten Vergleichsdatensatzes, der den dritten Datenpunkt und den vierten Datenpunkt umfasst; und
Bestimmen der Masse des Tröpfchens (30) der zweiten Fluidprobe (28) ferner auf der Grundlage des dritten und des vierten Datenpunkts in dem zweiten Vergleichsdatensatz.

7. Verfahren nach Anspruch 6, wobei:
das Flüssigkeitströpfchen-Abgabesystem (12) ferner ein dem Tank (22) zugeordnetes Ventil (26) umfasst;
das Abgeben des ersten Tröpfchens (30) der ersten Fluidprobe (28) ein Öffnen des Ventils (26) für eine erste vordefinierte Zeitspanne umfasst;
das Abgeben des zweiten Tröpfchens (30) der ersten Fluidprobe (28) ein Öffnen des Ventils (26) für eine zweite vordefinierte Zeitspanne umfasst;
das Abgeben des Tröpfchens (30) der zweiten Fluidprobe (28) ein Öffnen des Ventils (26) für eine dritte vordefinierte Zeitspanne umfasst;
das Abgeben des ersten Tröpfchens (30) der dritten Fluidprobe (28) ein Öffnen des Ventils (26) für eine vierte vordefinierte Zeitspanne umfasst; und
das Abgeben des zweiten Tröpfchens (30) der dritten Fluidprobe (28) ein Öffnen des Ventils (26) für eine fünfte vordefinierte Zeitspanne umfasst, wobei die erste vordefinierte Zeitspanne, die zweite vordefinierte Zeitspanne, die dritte vordefinierte Zeitspanne, die vierte vordefinierte Zeitspanne und die fünfte vordefinierte Zeitspanne im Wesentlichen gleich sind.

8. Verfahren nach Anspruch 6, ferner umfassend:
Identifizieren einer vierten Beziehung zwischen dem vierten Druck, der vierten Geschwindigkeit und der vierten Masse für die dritte Fluidprobe (28) auf der Grundlage des dritten Datenpunkts in dem Vergleichsdatensatz; und
Identifizieren einer fünften Beziehung zwischen dem fünften Druck, der fünften Geschwindigkeit und der fünften Masse für die dritte Fluidprobe (28) auf der Grundlage des vierten Datenpunkts in dem Vergleichsdatensatz, wobei das Bestimmen der Masse des Tröpfchens (30) der zweiten Fluidprobe (28) ferner auf der Grundlage der vierten Beziehung und der fünften Beziehung erfolgt.

9. Verfahren nach Anspruch 6, wobei das Flüssigkeitströpfchen-Abgabesystem (12) ferner einen Chronographen zum Messen der ersten Geschwindigkeit, der zweiten Geschwindigkeit, der dritten Geschwindigkeit, der vierten Geschwindigkeit und der fünften Geschwindigkeit umfasst; wobei der Chronograph ein Paar Lichtschrankenstrahlen aufweist, die in einem bekannten Abstand voneinander beabstandet sind.

10. Verfahren zum Erfassen von Probendaten aus einem Flüssigkeitströpfchen-Abgabesystem (12), das einen Tank (22) umfasst, das Verfahren umfassend:
Abgeben eines Tröpfchens (30) einer ersten Fluidprobe (28), die eine unbekannte Menge an mitgeführter Luft enthält, aus dem Tank (22) unter einem ersten Druck;
Messen einer ersten Geschwindigkeit des Tröpfchens (30) der ersten Fluidprobe (28) während der Abgabe unter dem ersten Druck;
Messen einer ersten Masse des Tröpfchens (30) der ersten Fluidprobe (28);
Aufzeichnen des ersten Drucks, der ersten Geschwindigkeit und der ersten Masse des ersten Tröpfchens (30) der ersten Fluidprobe (28) als einen ersten Datenpunkt;
Durchführen weiterer Tests an der ersten Fluidprobe (28) in einem sich wiederholenden Muster und in der folgenden Reihenfolge:
Abgeben eines anderen Tröpfchens (30) der ersten Fluidprobe (28) aus dem Tank (22) unter einem anderen Druck der ersten Fluidprobe (28), der sich von dem ersten Druck unterscheidet;
Messen einer Geschwindigkeit des anderen Tröpfchens (30) der ersten Fluidprobe (28) während der Abgabe unter dem anderen Druck der ersten Fluidprobe (28); und
Messen einer Masse des anderen Tröpfchens (30) der ersten Fluidprobe (28);
Aufzeichnen des anderen Drucks, der Geschwindigkeit und der Masse des anderen Tröpfchens (30) der ersten Fluidprobe (28) als einen weiteren Datenpunkt für die erste Fluidprobe (28);
Erzeugen eines Vergleichsdatensatzes, der den ersten Datenpunkt und einen weiteren Datenpunkt der ersten Fluidprobe (28) umfasst;
Entleeren der ersten Fluidprobe (28) aus dem Tank (22) und Befüllen des Tanks (22) mit einer zweiten Fluidprobe (28);
Abgeben eines Tröpfchens (30) einer zweiten Fluidprobe (28), die eine unbekannte Menge an mitgeführter Luft enthält, aus dem Tank (22) unter einem zweiten Druck;
Messen einer zweiten Geschwindigkeit des Tröpfchens (30) der zweiten Fluidprobe (28) während der Abgabe unter dem zweiten Druck; und
Bestimmen einer Masse des Tröpfchens (30) der zweiten Fluidprobe (28) auf der Grundlage des ersten Datenpunkts und anderer Datenpunkte in dem Vergleichsdatensatz, des zweiten Drucks und der zweiten Geschwindigkeit.

11. Verfahren nach Anspruch 10, wobei:
das Flüssigkeitströpfchen-Abgabesystem (12) ferner ein dem Tank (22) zugeordnetes Ventil (26) umfasst;
das Abgeben des ersten Tröpfchens (30) der ersten Fluidprobe (28) ein Öffnen des Ventils (26) für eine erste vordefinierte Zeitspanne umfasst;
das Abgeben jedes anderen Tröpfchens (30) der ersten Fluidprobe (28) ein Öffnen des Ventils (26) für eine zweite vordefinierte Zeitspanne umfasst; und
das Abgeben des ersten Tröpfchens (30) der zweiten Fluidprobe (28) ein Öffnen des Ventils (26) für eine dritte vordefinierte Zeitspanne umfasst, wobei die erste vordefinierte Zeitspanne, die zweite vordefinierte Zeitspanne und die dritte vordefinierte Zeitspanne im Wesentlichen gleich sind.

12. Flüssigkeitströpfchen-Abgabetestsystem (12), umfassend:
ein Flüssigkeitströpfchen-Abgabesystem, umfassend:
einen Tank (22), der dazu konfiguriert ist, ein Fluid (28) zu enthalten;
eine Druckquelle (24), die dazu konfiguriert ist, selektiv unterschiedliche Drücke auf das Fluid (28) in dem Tank (22) auszuüben;
ein dem Tank (22) zugeordnetes Ventil (26), das zur selektiven Betätigung zwischen einer geschlossenen Position und einer geöffneten Position dazu konfiguriert ist, die Abgabe eines Tröpfchens (30) des Fluids (28) aus dem Tank (22) zu ermöglichen;
einen Geschwindigkeitssensor (36), der benachbart zu dem Ventil (26) bereitgestellt und dazu konfiguriert ist, eine Geschwindigkeit des Tröpfchens (30) zu messen, während es aus dem Ventil (26) abgegeben wird;
eine Steuerung (32), die der Druckquelle (24) und dem Ventil (26) zugeordnet und dazu konfiguriert ist:
die Druckquelle (24) zu betätigen, um eine Druckbeaufschlagung einer ersten Fluidprobe (28) in dem Tank (22) auf einen ersten Druck zu ermöglichen, wobei die erste Fluidprobe (28) eine erste Menge an darin enthaltener mitgeführter Luft aufweist;
das Ventil (26) zu betätigen, um die Abgabe eines ersten Tröpfchens (30) der ersten Fluidprobe (28) aus dem Tank (22) unter dem ersten Druck zu ermöglichen;
die Druckquelle (24) zu betätigen, um eine Druckbeaufschlagung der ersten Fluidprobe (28) in dem Tank (22) auf einen zweiten Druck zu ermöglichen;
das Ventil (26) zu betätigen, um die Abgabe eines zweiten Tröpfchens (30) der ersten Fluidprobe (28) aus dem Tank (22) unter dem zweiten Druck zu ermöglichen;
die Druckquelle (24) zu betätigen, um eine Druckbeaufschlagung einer zweiten Fluidprobe (28) in dem Tank (22) auf einen dritten Druck zu ermöglichen; und
das Ventil (26) zu betätigen, um die Abgabe eines Tröpfchens (30) der zweiten Fluidprobe (28) aus dem Tank (22) unter dem dritten Druck zu ermöglichen; und **dadurch gekennzeichnet, dass** das System ferner umfasst:
ein Computersystem (14), das einen oder mehrere Prozessoren (16) umfasst, die dazu konfiguriert sind:
eine erste Geschwindigkeit des ersten Tröpfchens (30) der ersten Fluidprobe (28) mittels des Geschwindigkeitssensors (36) während der Abgabe unter dem ersten Druck zu messen;
eine erste Masse des ersten Tröpfchens (30) der ersten Fluidprobe (28) zu messen;
den ersten Druck, die erste Geschwindigkeit und die erste Masse des ersten Tröpfchens (30) der ersten Fluidprobe (28) als einen ersten Datenpunkt aufzuzeichnen;
eine zweite Geschwindigkeit des zweiten Tröpfchens (30) der ersten Fluidprobe (28) mittels des Geschwindigkeitssensors (36) während der Abgabe unter dem zweiten Druck zu messen;
eine zweite Masse des zweiten Tröpfchens (30) der ersten Fluidprobe (28) zu messen;
den zweiten Druck, die zweite Geschwindigkeit und die zweite Masse des zweiten Tröpfchens (30) der ersten Fluidprobe (28) als einen zweiten Datenpunkt aufzuzeichnen;
einen Vergleichsdatensatz zu erzeugen, der den ersten Datenpunkt und den zweiten Datenpunkt der ersten Fluidprobe (28) umfasst;
eine dritte Geschwindigkeit des Tröpfchens (30) der zweiten Fluidprobe (28) mittels des Geschwindigkeitssensors (36) während der Abgabe unter dem dritten Druck zu messen; und
eine Masse des Tröpfchens (30) der zweiten Fluidprobe (28) auf der Grundlage des ersten und des zweiten Datenpunkts in dem Vergleichsdatensatz, des dritten Drucks und der dritten Geschwindigkeit zu bestimmen.

13. Flüssigkeitströpfchen-Abgabetestsystem (12) nach Anspruch 12, wobei:
das Betätigen des Ventils (26), um die Abgabe des ersten Tröpfchens (30) der ersten Fluidprobe (28) zu ermöglichen, ein Öffnen des Ventils (26) für eine erste vordefinierte Zeitspanne umfasst;
das Betätigen des Ventils (26), um die Abgabe des zweiten Tröpfchens (30) der ersten Fluidprobe (28) zu ermöglichen, ein Öffnen des Ventils (26) für eine zweite vordefinierte Zeitspanne umfasst;
das Betätigen des Ventils (26), um die Abgabe des Tröpfchens (30) der zweiten Fluidprobe (28) zu ermöglichen, ein Öffnen des Ventils (26) für eine dritte vordefinierte Zeitspanne umfasst; und
die erste vordefinierte Zeitspanne, die zweite vordefinierte Zeitspanne und die dritte vordefinierte Zeitspanne im Wesentlichen gleich sind.

14. Flüssigkeitströpfchen-Abgabetestsystem (12) nach Anspruch 12, wobei:
der eine oder die mehreren Prozessoren (16) ferner dazu konfiguriert sind, eine erste Beziehung zwischen dem ersten Druck, der ersten Geschwindigkeit und der ersten Masse für die erste Fluidprobe (28) auf der Grundlage des ersten Datenpunkts in dem Vergleichsdatensatz zu identifizieren;
der eine oder die mehreren Prozessoren (16) ferner dazu konfiguriert sind, eine zweite Beziehung zwischen dem zweiten Druck, der zweiten Geschwindigkeit und der zweiten Masse für die erste Fluidprobe auf der Grundlage des zweiten Datenpunkts in dem Vergleichsdatensatz zu identifizieren; und
die Masse des Tröpfchens (30) der zweiten Fluidprobe (28) ferner auf der Grundlage der ersten Beziehung und der zweiten Beziehung bestimmt wird.

15. Flüssigkeitströpfchen-Abgabetestsystem (12) nach Anspruch 12, wobei:
die Steuerung (32) ferner dazu konfiguriert ist:
die Druckquelle (24) zu betätigen, um eine Druckbeaufschlagung einer dritten Fluidprobe (28) in dem Tank (22) auf einen vierten Druck zu ermöglichen;
das Ventil (26) zu betätigen, um die Abgabe eines ersten Tröpfchens (30) der dritten Fluidprobe (28) aus dem Tank (28) unter dem vierten Druck zu ermöglichen;
die Druckquelle (24) zu betätigen, um eine Druckbeaufschlagung der dritten Fluidprobe (28) in dem Tank (22) auf einen fünften Druck zu ermöglichen; und
das Ventil (26) zu betätigen, um die Abgabe eines zweiten Tröpfchens (30) der dritten Fluidprobe (28) aus dem Tank (22) unter dem fünften Druck zu ermöglichen; und
der eine oder die mehreren Prozessoren (16) ferner dazu konfiguriert sind:
eine vierte Geschwindigkeit des ersten Tröpfchens (30) der dritten Fluidprobe (28) mittels des Geschwindigkeitssensors (36) während der Abgabe unter dem vierten Druck zu messen;
eine vierte Masse des ersten Tröpfchens (30) der dritten Fluidprobe (28) zu messen;
den vierten Druck, die vierte Geschwindigkeit und die vierte Masse des ersten Tröpfchens (30) der dritten Fluidprobe (28) als einen dritten Datenpunkt aufzuzeichnen;
eine fünfte Geschwindigkeit des zweiten Tröpfchens (30) der dritten Fluidprobe (28) mittels des Geschwindigkeitssensors (36) während der Abgabe unter dem fünften Druck zu messen;
eine fünfte Masse des zweiten Tröpfchens (30) der dritten Fluidprobe (28) zu messen;
den fünften Druck, die fünfte Geschwindigkeit und die fünfte Masse des zweiten Tröpfchens (30) der dritten Fluidprobe (28) als einen vierten Datenpunkt aufzuzeichnen;
einen zweiten Vergleichsdatensatz zu erzeugen, der den dritten Datenpunkt und den vierten Datenpunkt umfasst; und
die Masse des Tröpfchens (30) der zweiten Fluidprobe (28) ferner auf der Grundlage des dritten und des vierten Datenpunkts in dem zweiten Vergleichsdatensatz zu bestimmen.

## Revendications

1. Procédé pour faire fonctionner un système de distribution de gouttelettes de liquide (12) comprenant un réservoir (22), le procédé comprenant :
la distribution d'une première gouttelette d'un premier échantillon de fluide (28), contenant une quantité inconnue d'air entraîné, à partir du réservoir (22) à une première pression ;
la mesure d'une première vitesse de la première gouttelette pendant la distribution à la première pression ;
la mesure d'une première masse de la première gouttelette (30) ;
l'enregistrement de la première pression, de la première vitesse et de la première masse de la première gouttelette en tant que premier point de données ;
la distribution d'une deuxième gouttelette (30) du premier échantillon de fluide (28) à partir du réservoir (22) à une deuxième pression ;
la mesure d'une deuxième vitesse de la deuxième gouttelette (30) pendant la distribution à la deuxième pression ;
la mesure d'une deuxième masse de la deuxième gouttelette (30) ; **caractérisé en ce que** le procédé comprend en outre :
l'enregistrement de la deuxième pression, de la deuxième vitesse et de la deuxième masse de la première gouttelette (30) en tant que deuxième point de données ;
la génération d'un ensemble de données comparatives qui comprend le premier point de données et le deuxième point de données ;
la vidange du réservoir (22) du premier échantillon de fluide (28) et le remplissage du réservoir (22) avec un deuxième échantillon de fluide (28) ;
la distribution d'une gouttelette (30) d'un deuxième échantillon de fluide (28), contenant une quantité inconnue d'air entraîné, à partir du réservoir (22) à une troisième pression ;
la mesure d'une troisième vitesse de la gouttelette (30) du deuxième échantillon de fluide (28) pendant la distribution à la troisième pression ; et
la détermination d'une masse de la gouttelette (30) du deuxième échantillon de fluide (28) sur la base des premier et deuxième points de données dans l'ensemble de données comparatives, de la troisième pression et de la troisième vitesse.

2. Procédé selon la revendication 1 dans lequel :
le système de distribution de gouttelettes de liquide (12) comprend en outre une vanne (26) associée au réservoir (22) ;
la distribution de la première gouttelette (30) du premier échantillon de fluide (28) comprend l'ouverture de la vanne (26) pendant une première période de temps prédéfinie ;
la distribution de la deuxième gouttelette (30) du premier échantillon de fluide (28) comprend l'ouverture de la vanne (26) pendant une deuxième période de temps prédéfinie ; et
la distribution de la gouttelette (30) du deuxième échantillon de fluide (28) comprend l'ouverture de la vanne (26) pendant une troisième période de temps prédéfinie, dans lequel la première période de temps prédéfinie, la deuxième période de temps prédéfinie et la troisième période de temps prédéfinie sont essentiellement les mêmes.

3. Procédé selon la revendication 1 dans lequel le système de distribution de gouttelettes de liquide (12) comprend en outre un capteur de vitesse (36) pour mesurer la première vitesse, la deuxième vitesse et la troisième vitesse, et éventuellement dans lequel le capteur de vitesse (36) comprend un chronographe qui a une paire de faisceaux de barrière lumineuse qui sont espacés d'une distance connue l'un de l'autre.

4. Procédé selon la revendication 3 dans lequel le système de distribution de gouttelettes de liquide (12) est un dispositif de test de surface.

5. Procédé selon la revendication 1 comprenant en outre :
l'identification d'une première relation entre la première pression, la première vitesse et la première masse pour le premier échantillon de fluide (28) sur la base du premier point de données dans l'ensemble de données comparatives ; et
l'identification d'une deuxième relation entre la deuxième pression, la deuxième vitesse et la deuxième masse pour le premier échantillon de fluide (28) sur la base du deuxième point de données dans l'ensemble de données comparatives, dans lequel la détermination de la masse de la gouttelette (30) du deuxième échantillon de fluide est en outre basée sur la première relation et la deuxième relation.

6. Procédé selon la revendication 1 comprenant en outre :
la distribution d'une première gouttelette (30) d'un troisième échantillon de fluide (28), contenant une quantité inconnue d'air entraîné, à partir du réservoir (22) à une quatrième pression ;
la mesure d'une quatrième vitesse de la première gouttelette (30) du troisième échantillon de fluide (28) pendant la distribution à la quatrième pression ;
la mesure d'une quatrième masse de la première gouttelette (30) du troisième échantillon de fluide ;
l'enregistrement de la quatrième pression, de la quatrième vitesse et de la quatrième masse de la première gouttelette (30) du troisième échantillon de fluide (28) en tant que troisième point de données ;
la distribution d'une deuxième gouttelette (30) du troisième échantillon de fluide (28) à partir du réservoir (22) à une cinquième pression ;
la mesure d'une cinquième vitesse de la deuxième gouttelette (30) du troisième échantillon de fluide (28) pendant la distribution à la cinquième pression ;
la mesure d'une cinquième masse de la deuxième gouttelette (30) du troisième échantillon de fluide (28) ;
l'enregistrement de la cinquième pression, de la cinquième vitesse et de la cinquième masse de la deuxième gouttelette (30) du troisième échantillon de fluide (28) en tant que quatrième point de données ;
la génération d'un deuxième ensemble de données comparatives qui comprend le troisième point de données et le quatrième point de données ; et
la détermination de la masse de la gouttelette (30) du deuxième échantillon de fluide (28) en outre sur la base des troisième et quatrième points de données dans le deuxième ensemble de données comparatives.

7. Procédé selon la revendication 6 dans lequel :
le système de distribution de gouttelettes de liquide (12) comprend en outre une vanne (26) associée au réservoir (22) ;
la distribution de la première gouttelette (30) du premier échantillon de fluide (28) comprend l'ouverture de la vanne (26) pendant une première période de temps prédéfinie ;
la distribution de la deuxième gouttelette (30) du premier échantillon de fluide (28) comprend l'ouverture de la vanne (26) pendant une deuxième période de temps prédéfinie ;
la distribution de la gouttelette (30) du deuxième échantillon de fluide (28) comprend l'ouverture de la vanne (26) pendant une troisième période de temps prédéfinie ;
la distribution de la première gouttelette (30) du troisième échantillon de fluide (28) comprend l'ouverture de la vanne (26) pendant une quatrième période de temps prédéfinie ; et
la distribution de la deuxième gouttelette (30) du troisième échantillon de fluide (28) comprend l'ouverture de la vanne (26) pendant une cinquième période de temps prédéfinie, dans lequel la première période de temps prédéfinie, la deuxième période de temps prédéfinie, la troisième période de temps prédéfinie, la quatrième période de temps prédéfinie et la cinquième période de temps prédéfinie sont essentiellement les mêmes.

8. Procédé selon la revendication 6 comprenant en outre :
l'identification d'une quatrième relation entre la quatrième pression, la quatrième vitesse et la quatrième masse pour le troisième échantillon de fluide (28) sur la base du troisième point de données dans l'ensemble de données comparatives ; et
l'identification d'une cinquième relation entre la cinquième pression, la cinquième vitesse et la cinquième masse pour le troisième échantillon de fluide (28) sur la base du quatrième point de données dans l'ensemble de données comparatives, dans lequel la détermination de la masse de la gouttelette (30) du deuxième échantillon de fluide (28) est en outre basée sur la quatrième relation et la cinquième relation.

9. Procédé selon la revendication 6, dans lequel le système de distribution de gouttelettes de liquide (12) comprend en outre un chronographe pour mesurer la première vitesse, la deuxième vitesse, la troisième vitesse, la quatrième vitesse et la cinquième vitesse ; dans lequel le chronographe a une paire de faisceaux de barrière lumineuse qui sont espacés d'une distance connue l'un de l'autre.

10. Procédé de collecte de données d'échantillon à partir d'un système de distribution de gouttelettes de liquide (12) comprenant un réservoir (22), le procédé comprenant :
la distribution d'une gouttelette (30) d'un premier échantillon de fluide (28), contenant une quantité inconnue d'air entraîné, à partir du réservoir (22) à une première pression ;
la mesure d'une première vitesse de la gouttelette (30) du premier échantillon de fluide (28) pendant la distribution à la première pression ;
la mesure d'une première masse de la gouttelette (30) du premier échantillon de fluide (28) ;
l'enregistrement de la première pression, de la première vitesse et de la première masse de la première gouttelette (30) du premier échantillon de fluide (28) en tant que premier point de données ;
la réalisation de tests supplémentaires sur le premier échantillon de fluide (28) selon un schéma répétitif et dans l'ordre suivant :
la distribution d'une gouttelette différente (30) du premier échantillon de fluide (28) à partir du réservoir (22) à une pression différente du premier échantillon de fluide (28) qui est différente de la première pression ;
la mesure d'une vitesse de la gouttelette différente (30) du premier échantillon de fluide (28) pendant la distribution à la pression différente du premier échantillon de fluide (28) ; et
la mesure d'une masse de la gouttelette différente (30) du premier échantillon de fluide (28) ;
l'enregistrement de la pression différente, de la vitesse et de la masse de la gouttelette différente (30) du premier échantillon de fluide (28) en tant qu'autre point de données pour le premier échantillon de fluide (28) ;
la génération d'un ensemble de données comparatives qui comprend le premier point de données et un autre point de données du premier échantillon de fluide (28) ;
la vidange du réservoir (22) du premier échantillon de fluide (28) et le remplissage du réservoir (22) avec un deuxième échantillon de fluide (28) ;
la distribution d'une gouttelette (30) d'un deuxième échantillon de fluide (28), contenant une quantité inconnue d'air entraîné, à partir du réservoir (22) à une deuxième pression ;
la mesure d'une deuxième vitesse de la gouttelette (30) du deuxième échantillon de fluide (28) pendant la distribution à la deuxième pression ; et
la détermination d'une masse de la gouttelette (30) du deuxième échantillon de fluide (28) sur la base du premier point de données et d'autres points de données dans l'ensemble de données comparatives, de la deuxième pression et de la deuxième vitesse.

11. Procédé selon la revendication 10 dans lequel :
le système de distribution de gouttelettes de liquide (12) comprend en outre une vanne (26) associée au réservoir (22) ;
la distribution de la première gouttelette (30) du premier échantillon de fluide (28) comprend l'ouverture de la vanne (26) pendant une première période de temps prédéfinie ;
la distribution de chaque gouttelette différente (30) du premier échantillon de fluide (28) comprend l'ouverture de la vanne (26) pendant une deuxième période de temps prédéfinie ; et
la distribution de la première gouttelette (30) du deuxième échantillon de fluide (28) comprend l'ouverture de la vanne (26) pendant une troisième période de temps prédéfinie, dans lequel la première période de temps prédéfinie, la deuxième période de temps prédéfinie et la troisième période de temps prédéfinie sont essentiellement les mêmes.

12. Système de test de distribution de gouttelettes de liquide (12) comprenant :
un système de distribution de gouttelettes de liquide comprenant :
un réservoir (22) configuré pour contenir un fluide (28) ;
une source de pression (24) configurée pour appliquer sélectivement différentes pressions au fluide (28) dans le réservoir (22) ;
une vanne (26) associée au réservoir (22) et configurée pour un actionnement sélectif entre une position fermée et une position ouverte afin de faciliter la distribution d'une gouttelette (30) de fluide (28) à partir du réservoir (22) ;
un capteur de vitesse (36) qui est prévu adjacent à la vanne (26) et est configuré pour mesurer une vitesse de la gouttelette (30) lorsqu'elle est distribuée à partir de la vanne (26) ;
un contrôleur (32) associé à la source de pression (24) et à la vanne (26) et configuré pour :
faire fonctionner la source de pression (24) afin de faciliter la mise sous pression d'un premier échantillon de fluide (28) dans le réservoir (22) à une première pression, le premier échantillon de fluide (28) ayant une première quantité d'air entraîné contenue dans celui-ci ;
faire fonctionner la vanne (26) afin de faciliter la distribution d'une première gouttelette (30) du premier échantillon de fluide (28) à partir du réservoir (22) à la première pression ;
faire fonctionner la source de pression (24) afin de faciliter la mise sous pression du premier échantillon de fluide (28) dans le réservoir (22) à une deuxième pression ;
faire fonctionner la vanne (26) afin de faciliter la distribution d'une deuxième gouttelette (30) du premier échantillon de fluide (28) à partir du réservoir (22) à la deuxième pression ;
faire fonctionner la source de pression (24) afin de faciliter la mise sous pression d'un deuxième échantillon de fluide (28) dans le réservoir (22) à une troisième pression ; et
faire fonctionner la vanne (26) afin de faciliter la distribution d'une gouttelette (30) du deuxième échantillon de fluide (28) à partir du réservoir (22) à
la troisième pression ; et **caractérisé en ce que** le système comprend en outre
un système informatique (14) comprenant un ou plusieurs processeurs (16) configurés pour :
mesurer une première vitesse de la première gouttelette (30) du premier échantillon de fluide (28) via le capteur de vitesse (36) pendant la distribution à la première pression ;
mesurer une première masse de la première gouttelette (30) du premier échantillon de fluide (28) ;
enregistrer la première pression, la première vitesse et la première masse de la première gouttelette (30) du premier échantillon de fluide (28) en tant que premier point de données ;
mesurer une deuxième vitesse de la deuxième gouttelette (30) du premier échantillon de fluide (28) via le capteur de vitesse (36) pendant la distribution à la deuxième pression ;
mesurer une deuxième masse de la deuxième gouttelette (30) du premier échantillon de fluide (28) ;
enregistrer la deuxième pression, la deuxième vitesse et la deuxième masse de la deuxième gouttelette (30) du premier échantillon de fluide (28) en tant que deuxième point de données ;
générer un ensemble de données comparatives qui comprend le premier point de données et le deuxième point de données du premier échantillon de fluide (28) ;
mesurer une troisième vitesse de la gouttelette (30) du deuxième échantillon de fluide (28) via le capteur de vitesse (36) pendant la distribution à la troisième pression ; et
déterminer une masse de la gouttelette (30) du deuxième échantillon de fluide (28) sur la base des premier et deuxième points de données dans l'ensemble de données comparatives, de la troisième pression et de la troisième vitesse.

13. Système de test de distribution de gouttelettes de liquide (12) selon la revendication 12 dans lequel :
le fait de faire fonctionner la vanne (26) pour faciliter la distribution de la première gouttelette (30) du premier échantillon de fluide (28) comprend l'ouverture de la vanne (26) pendant une première période de temps prédéfinie ;
le fait de faire fonctionner la vanne (26) pour faciliter la distribution de la deuxième gouttelette (30) du premier échantillon de fluide (28) comprend l'ouverture de la vanne (26) pendant une deuxième période de temps prédéfinie ;
le fait de faire fonctionner la vanne (26) pour faciliter la distribution de la gouttelette (30) du deuxième échantillon de fluide (28) comprend l'ouverture de la vanne (26) pendant une troisième période de temps prédéfinie ; et
la première période de temps prédéfinie, la deuxième période de temps prédéfinie et la troisième période de temps prédéfinie sont essentiellement les mêmes.

14. Système de test de distribution de gouttelettes de liquide (12) selon la revendication 12 dans lequel :
les un ou plusieurs processeurs (16) sont en outre configurés pour identifier une première relation entre la première pression, la première vitesse et la première masse pour le premier échantillon de fluide (28) sur la base du premier point de données dans l'ensemble de données comparatives ;
les un ou plusieurs processeurs (16) sont en outre configurés pour identifier une deuxième relation entre la deuxième pression, la deuxième vitesse et la deuxième masse pour le premier échantillon de fluide sur la base du deuxième point de données dans l'ensemble de données comparatives ; et
la masse de la gouttelette (30) du deuxième échantillon de fluide (28) est en outre déterminée sur la base de la première relation et de la deuxième relation.

15. Système de test de distribution de gouttelettes de liquide (12) selon la revendication 12 dans lequel :
le contrôleur (32) est en outre configuré pour :
faire fonctionner la source de pression (24) afin de faciliter la mise sous pression d'un troisième échantillon de fluide (28) dans le réservoir (22) à une quatrième pression ;
faire fonctionner la vanne (26) afin de faciliter la distribution d'une première gouttelette (30) du troisième échantillon de fluide (28) à partir du réservoir (28) à la quatrième pression ;
faire fonctionner la source de pression (24) afin de faciliter la mise sous pression du troisième échantillon de fluide (28) dans le réservoir (22) à une cinquième pression ; et
faire fonctionner la vanne (26) afin de faciliter la distribution d'une deuxième gouttelette (30) du troisième échantillon de fluide (28) à partir du réservoir (22) à la cinquième pression ; et
les un ou plusieurs processeurs (16) sont en outre configurés pour :
mesurer une quatrième vitesse de la première gouttelette (30) du troisième échantillon de fluide (28) via le capteur de vitesse (36) pendant la distribution à la quatrième pression ;
mesurer une quatrième masse de la première gouttelette (30) du troisième échantillon de fluide (28) ;
enregistrer la quatrième pression, la quatrième vitesse et la quatrième masse de la première gouttelette (30) du troisième échantillon de fluide (28) en tant que troisième point de données ;
mesurer une cinquième vitesse de la deuxième gouttelette (30) du troisième échantillon de fluide (28) via le capteur de vitesse (36) pendant la distribution à la cinquième pression ;
mesurer une cinquième masse de la deuxième gouttelette (30) du troisième échantillon de fluide (28) ;
enregistrer la cinquième pression, la cinquième vitesse et la cinquième masse de la deuxième gouttelette (30) du troisième échantillon de fluide (28) en tant que quatrième point de données ;
générer un deuxième ensemble de données comparatives qui comprend le troisième point de données et le quatrième point de données ; et
déterminer la masse de la gouttelette (30) du deuxième échantillon de fluide (28) en outre sur la base des troisième et quatrième points de données dans le deuxième ensemble de données comparatives.
